# EUROPEAN PATENT SPECIFICATION

(11) **EP 4 699 200 B1**
(45) Date of publication and mention of the grant of the patent: **26.08.2026**
(21) Application number: 24717681.1
(22) Date of filing: 08.04.2024
(51) Int. Cl.: H02J 3/14, H02J 3/28, C25B 15/02

(54) **METHOD FOR LOAD CONTROL OF AN ELECTROLYSIS PLANT AND ELECTROLYSIS PLANT**
VERFAHREN ZUR LASTSTEUERUNG EINER ELEKTROLYSEANLAGE UND ELEKTROLYSEANLAGE
PROCÉDÉ DE RÉGULATION DE CHARGE D'UNE INSTALLATION D'ÉLECTROLYSE ET INSTALLATION D'ÉLECTROLYSE

(30) Priority: 18.04.2023 EP 23168412
(43) Date of publication of application: 25.02.2026
(73) Proprietor: thyssenkrupp nucera AG & Co. KGaA, 44269 Dortmund (DE)
(72) Inventor: WAGNER, Dietmar, 58706 Menden (DE); ESSMANN, Lenn, 44149 Dortmund (DE); BRANDES, David, 44143 Dortmund (DE); GRUNDLER, Jonas, 80636 München (DE); VERNISSE, Léa, 80937 München (DE)
(74) Representative: thyssenkrupp Intellectual Property GmbH
(86) International application number: PCT/EP2024/059433
(87) International publication number: WO 2024/217903

(56) References cited:
- EP-A1- 3 839 102
- CN-A- 112 410 801
- US-A1- 2010 307 924
- US-A1- 2022 376 631
- TADLOCK TERRY ET AL: "The Green Hydrogen Revolution - Integrating Hydrogen Into Industrial Applications", 2022 IEEE IAS PETROLEUM AND CHEMICAL INDUSTRY TECHNICAL CONFERENCE (PCIC), IEEE, 26 September 2022 (2022-09-26), pages 185 - 193, XP034382611, DOI: 10.1109/PCIC42668.2022.10181257

## Description

### Background of the invention

The invention relates to a method for load control of an electrolysis plant according to the preamble of claim 1 and an electrolysis plant according to the preamble of claim10.

Large scale electrolysis plants typically have a modular setup, wherein the plant comprises a number of electrolysis modules, each comprising a stack of individual electrolysis cells, which modules are supplied by an equal number of transformer-rectifier units that are connected to the power grid. The electrical power from the distribution or even transmission level of the power grid is typically first transformed and distributed by one or more switchgears carrying an AC switchgear voltage to the transformer-rectifier units. The transformer-rectifier units transform the AC switchgear voltage to an AC intermediary voltage and convert this AC intermediary voltage into an individual DC module voltage. The transformer-rectifier units are controlled by an electronic control unit in order to change the voltage level of the individual DC module voltages and thereby set the respective module load set point for each electrolysis module. By controlling the module load set points of all modules the total energy demand and/or product output of the plant is controlled.

US 4,363,101 A describes a computerized power demand control in an electrochemical plant of the above-described type. In order to provide regulation of the electrolytic production processes within the cells and at the same time meet the power demand constraints, energy is supplied to each electrolytic cell line through an individual tapping transformer controlled by a computer. The tapped output of the transformer is fed in a corresponding converter generating direct current for the respective electrolytic cell line. Each cell line has an individual power meter and an individual ampere meter feeding back information to the computer. Current is controlled by tap regulation under command of the computer in order to achieve toward the end of each demand period, an ideal rate of consumption, whereby the overall plant totalizes energy consumed in such amount to meet the assigned target.

According to this known setup of power demand control in an electrochemical plant, each cell line or electrolysis module is a separate, independently controlled consumer of electrical energy. As every AC/DC converter is imperfect to some extent, each of the converters used to supply DC power to the electrolysis cells will give rise to disturbing harmonics of the primary frequency of the AC voltage being superimposed to the DC voltage and - in a back-reaction - also to the power grid.

In the traditional setup of electrochemical plants as e.g. in the chlor-alkali industry these back-reactions to the grid have been restricted to an acceptable level either by the limited size of these plants or by employing a harmonic filter on the level of the switch gear of the plant, filtering out the superimposed harmonics. The design of such a harmonic filter was comparatively simple, because electrochemical plants like chlor-alkali plants typically run almost all of the time very close to their nominal power consumption in order to maximize product output and profit. Thus, the structure and composition of the harmonics produced by the converters was known beforehand and did not change significantly during operation.

The article "The Green Hydrogen Revolution - Integrating Hydrogen into Industrial Applications", by Terry Tadlock, Omar Rubio and Dragan Ristanovic,

DOI:10.1109/PCIC42668.2022.10181257 describes a method and an electrolysis plant according to the preamble of claims 1 and 10. The hydrogen plants described are based on the design philosophy to either maintain hydrogen output at the nominal level over the entire lifetime of the PEM module arrays, or to maintain a constant power consumption, meaning that hydrogen output decreases over time. In this setup a rectifier transformer with MW primary winding and four LV secondary windings to generate a 24-pulse system on the MV side using a 15-degree phase shift between the LV windings is used in combination with thyristor based 6-pulse rectifiers, one per module string, to convert AC power into DC and adjust DC voltage and current to achieve the required hydrogen production rate. In addition, harmonic filters are proposed, which should be installed nearest to the source of the harmonics, being the MW voltage level.

EP 3 839 102 A1 describes an electrical installation comprising a harmonic polluter, being in particular a unit for producing hydrogen by electrolysis of water, and an active harmonic filter having a DC electric bus equipped with a capacitor. An electrolyzer is connected to the DC electric bus of the active harmonic filter, which is configured to produce hydrogen from power absorbed by the active harmonic filter and transmitted to the electrolyzer via the DC electric bus.

With the rise of renewable energies becoming the main source of electrical power, the power supply and the electricity prices will be subject to larger fluctuations than before. Moreover, electrolysis plants for the electrolysis of water used to produce so-called green hydrogen will be much larger than conventional chlor-alkali plants and will have a nominal power in the range of hundred(s) of megawatts or even in the gigawatt range. These large scale plants will have a considerably stronger back-effect on the grid and will need to be able to be operated with significantly stronger fluctuations in the load set point depending on the availability of green energy, which is influenced e.g. by weather conditions (sunshine, wind, etc.).

Thus, in present and future electrolysis plants there is a need to be able to control the load of the plant in a more variable way, while at the same time limiting the back-reactions on the grid due to harmonics generation within the plant. In particular, harmonic filters that could be used in principle to reduce the back-reactions on the grid become very expensive and difficult to design in order to meet these requirements under varying load set points.

### Brief Summary of Invention

It is therefore the object of the present invention, to provide a method for load control of an electrolysis plant and an electrolysis plant by which the back-reaction of the electrolysis plant to the power grid due to disturbing harmonics generated within the electrolysis plant is reduced.

This object is achieved by the method with the features of claim 1.

Hereby, a method for load control of an electrolysis plant is provided, wherein the electrolysis plant comprises
- at least two electrolysis modules each comprising a plurality of electrolysis cells (5) that are connected electrically in series,
- at least one transformer-rectifier unit for providing the electrolysis modules associated to the transformer-rectifier unit with an individual DC module voltage to meet a module load set point of the respective module. The transformer-rectifier unit comprises a transformer for providing an AC intermediary voltage and a rectifier for converting the AC intermediary voltage into the respective DC module voltage, and
- a control unit connected to the transformer-rectifier unit for setting the module load set points of the associated electrolysis modules.

The method comprises the following steps that are carried out by the control unit:
- determining a plant load set point of the electrolysis plant corresponding to a target energy supply and/or target product output of the electrolysis plant,
- determining a module efficiency of each of the electrolysis modules,
- optimizing a plant efficiency function of the electrolysis plant having the module load set points of the electrolysis modules as variables and the module efficiencies as parameters with the constraint to meet the plant load set point, and
- setting the module load set points of the modules according to the optimized plant efficiency function.

According to the invention at least two of the electrolysis modules are associated to the transformer-rectifier unit, and the transformer-rectifier unit contains one common transformer and one rectifier per associated electrolysis module. The AC intermediary voltages supplied by the common transformer to the associated rectifiers differ by a preset first phase difference, and the optimization step is carried out with the constraint that any two electrolysis modules associated to the same transformer-rectifier unit are to be operated at the same module load set point.

The method according to the invention is based on the technical insight that interfering harmonic frequencies of the primary frequency of the AC intermediary voltage are generated in all rectifiers of the plant and occur in a fixed phase relation with respect to the AC intermediary voltage leading. In the known design, the parasitic harmonics caused by different rectifiers therefore add up due to constructive interference on the plant level. According to the invention, however, it is provided that at least two rectifiers arranged within the same transformer-rectifier unit are fed by AC intermediary voltages from a common transformer that differ by a preset first phase difference. In case of more than two rectifiers being fed by the same common transformer this means that the corresponding AC intermediary voltages are equally spaced by the preset first phase difference. The preset first phase difference has the effect that there is an at least partial negative interference of the disturbing harmonics already at the level of the transformer-rectifier unit. The amplitude of the resulting disturbing harmonics upstream of the transformer rectifier unit is therefore reduced.

Independent of the specific value of the preset first phase difference the amplitude of resulting combined effect of the disturbing harmonics of both rectifiers is most effectively reduced, if the electrolysis modules supplied by the rectifiers are operated at the same load set point. This results in comparable individual amplitudes of the harmonics generated by the rectifiers, which is a prerequisite for an effective mutual annihilation of the harmonics by superposition.

Therefore, according to the invention, it is proposed to accept a certain loss in the overall efficiency of the whole plant in order to balance the load between electrolysis modules supplied by the same transformer rectifier unit and thereby to gain reduced disturbing harmonics already at the level of the transformer-rectifier unit(s). Reducing disturbing harmonics already at the level of the transformer-rectifier unit(s) has the additional benefit that those harmonics are not propagated even within the plant itself, which could give rise to disturbances with other electric equipment in the plant.

Further, it is to be noted that the method according to the invention allows for a comparatively economical reduction of disturbing harmonics by intelligent plant design and load control. While it is generally possible to reduce harmonics by building ever more complex and thus more ideal rectifiers that directly cause a lower fraction of disturbing harmonics, the method according to the invention acknowledges the fact, that on the DC side there is no need for an ideal DC module voltage, because electrolysis cells are not very sensitive to pulsations, and the back reactions on the AC side can be reduced by combining several rectifiers within a transformer-rectifier unit in a smart way. Thus, the plant can be designed e.g. with comparatively simple 6-pulse rectifiers.

According to the invention, the electrolysis plant comprises at least one second transformer-rectifier unit, wherein the transformer-rectifier units are connected to a common power supply switchgear, wherein the AC intermediary voltages of the transformer-rectifier units pairwise differ by a preset second phase difference. The second phase difference corresponds to the first phase difference divided by the number of transformer-rectifier units attached to the common switchgear. The optimization is carried out with the constraint that any two electrolysis modules connected to the same switchgear are to be operated at the same module load set point. The term "corresponds to" according to this disclosure means that the second phase difference is equal to the first phase difference divided by the number of transformer-rectifier units attached to the common switchgear up to a tolerance of +/-10 %, or preferably +/-5 %.

Although there is a reduction of all harmonics already by the first phase difference, an even more effective reduction of higher harmonics can be achieved if there is a second phase difference implemented between the transformer-rectifier units on the level of the power supply switchgear. In particular, if the first phase difference is adapted to be most effective in the cancellation of a particular lower order of harmonics, the second phase difference being an integer divisor of the first phase difference will be effective in reducing a corresponding higher order of disturbing harmonics.

Further it is preferred if the first phase difference corresponds to 60° divided by the number of electrolysis modules being supplied by the same transformer-rectifier unit. The term "corresponds to" according to this disclosure means that the first phase difference is equal to 60° divided by the number of electrolysis modules being supplied by the same transformer-rectifier unit up to a tolerance of +/-10 %, or preferably +/-5 %. By using this specific value for the first phase difference the reduction of the typically most prominent 5^{th} and 7^{th} order of disturbing harmonics is optimized, leading to an almost complete mutual annihilation of the disturbing harmonics stemming from the different rectifiers of the transformer-rectifier unit.

Preferably, the optimization is carried out with the further constraint that the module load set points are to be chosen from a fixed set of permissible load set points. In addition to the harmonics reduction based on the plant design and the load control, it may be advantageous to employ a harmonic filter on the plant level in order to mitigate any remnant disturbing harmonics. The design of such a harmonic filter will be more simple and thus more economical, if the module load set points of the electrolysis plant are chosen from a fixed set of permissible load set points, because the structure and intensity of the harmonics occurring at those load set points can be calculated or simulated beforehand. In particular, it is preferred if the set of permissible load set points is a discrete set.

In preferred embodiments, the set of permissible load set points includes a shutdown of the respective module corresponding to zero load. In order to allow for a large variability in the load set point of the plant, while not affecting the overall efficiency of the plant to a large extent, it is advantageous if the method for load control can shut down modules completely to a zero load set point. In particular, it will be advantageous to shut down the least efficient modules in a partial load state.

Further, it is preferred that a threshold number of permissible shutdowns per module is defined, wherein the control unit counts a number of executed shutdowns for each electrolysis module and wherein the optimization is carried out with the constraint that the threshold number of permissible shutdowns must not be exceeded for any electrolysis module. By limiting the number of permissible shutdowns of each module the service life of the whole plant is extended, because the shutdowns are distributed over a larger set of modules.

In further preferred embodiments, a maximum permissible duration per shutdown is defined, and the control unit measures the duration of executed shutdowns for each electrolysis module. The optimization is preferably carried out with the constraint that the maximum permissible duration per shutdown must not be exceeded for any electrolysis module. By monitoring the durations per shutdown, it is achieved that each module will be in operation on a regular basis.

It is also preferred if the electrolysis modules are grouped into at least two groups, wherein the optimization is carried out with the constraint that the number of executed shutdowns is evenly distributed among the electrolysis modules of each group. Having at least two groups of electrolysis modules with an almost equal number of performed shutdowns is advantageous with respect to the maintenance schedule of the modules. By having different shutdown groups of modules it is possible to have for example different groups queuing for refurbishment at different points in time. Having an even distribution of shutdowns within each of these group will therefore result in making better use of the permissible number of shutdowns. In a peer group of modules being next in line for refurbishment that have on average a rather low efficiency and rather high number of shutdowns, already, shutdowns are encouraged for comparatively high efficient modules of that group. On the other hand, shutdowns are avoided for comparatively low efficient modules in a peer group of freshly refurbished modules with a low number of shutdowns on average.

Preferably, at least part of the constraints discussed above are implemented as soft constraints to the plant efficiency function, in such a way that the extent to which the soft constraint is violated is penalized in plant efficiency function. As in almost every complex optimization problem there may come up situations in which the above described constraints cannot be satisfied all at the same time, and/or it may not be possible to find an exact globally optimal solution. The optimization step according to the invention therefore comprises an optimization in the sense of a mathematical algorithm that iteratively finds a locally optimal solution for the plant efficiency function. In such mathematical algorithms it can be advantageous to implement constraints as so-called soft constraints. Soft constraints influence the position of locally optimal solutions within variable space, but do not strictly exclude optimal solutions that (slightly) violate these constraints.

The object is further achieved by an electrolysis plant comprising
- at least two electrolysis modules each comprising a plurality of electrolysis cells that are connected electrically in series,
- at least one transformer-rectifier unit for providing the electrolysis modules associated to the transformer-rectifier unit with an individual DC module voltage to meet a module load set point of the respective module, wherein the transformer-rectifier unit comprises a transformer for providing an AC intermediary voltage and a rectifier for converting the AC intermediary voltage into the respective DC module voltage, and
- a control unit connected to the transformer-rectifier unit for setting the module load set points of the associated electrolysis modules. According to the invention, at least two of the electrolysis modules are associated to the transformer-rectifier unit. The transformer-rectifier unit contains one common transformer and one rectifier per associated electrolysis module. The transformer rectifier unit is configured such that the AC intermediary voltages supplied by the common transformer to the associated rectifiers differ by a preset first phase difference. By the preset first phase difference disturbing harmonics generated in the rectifiers are superimposed on the primary side of the common transformer in an at least partially negatively interfering manner, such that the back-reactions of the harmonics to upstream electronic components and to the grid are reduced.

The electrolysis plant comprises at least one second transformer-rectifier unit and the transformer-rectifier units are connected to a common power supply switchgear. The transformer rectifier units are preferably configured such that the AC intermediary voltages of the transformer-rectifier units pairwise differ by a preset second phase difference. The second phase difference corresponds preferably to the first phase difference divided by the number of transformer-rectifier units attached to the common switchgear. By choosing a second phase difference such that the first phase difference is an integer multiple of the second phase difference, higher order harmonics are effectively reduced at the switch gear level.

Particularly preferably, the control unit is configured to perform the method according to the invention as described above.

Further, the object is achieved by a computer program comprising instructions which, when the program is executed by a control unit in an electrolysis plant according to the invention, cause the control unit to carry out the inventive method as described above.

Lastly the object is also achieved by a computer-readable storage medium comprising instructions which, when executed by a control unit in an electrolysis plant according to the invention cause the control unit to carry out the inventive method as described above.

Further advantages of the invention are described in the following with regard to the embodiments shown in the attached drawings.

### Brief Description of Drawings

- Fig. 1: shows schematically an electrolysis plant according to the invention,
- Fig. 2: shows schematically the AC intermediate voltages occurring in the transformer-rectifier units in the electrolysis plant of Fig. 1,
- Figs. 3A to 3C: show schematically the reduction of disturbing harmonics achieved by the invention,
- Fig. 4: shows schematically a flow chart of the method according to the invention,
- Fig. 5: shows schematically a second embodiment of an electrolysis plant according to the invention, having eight electrolysis modules associated to four transformer-rectifier units and two switch gears, and exemplary numerical values for the module efficiencies, and
- Fig. 6: shows schematically a column diagram of the load set points for each of the electrolysis modules of Fig. 5 resulting from optimizing a plant efficiency function in a partial load state while taking into account different sets of constraints.

### Detailed Description of Invention

In the drawings same parts are consistently identified by the same reference signs and are therefore generally described and referred to only once.

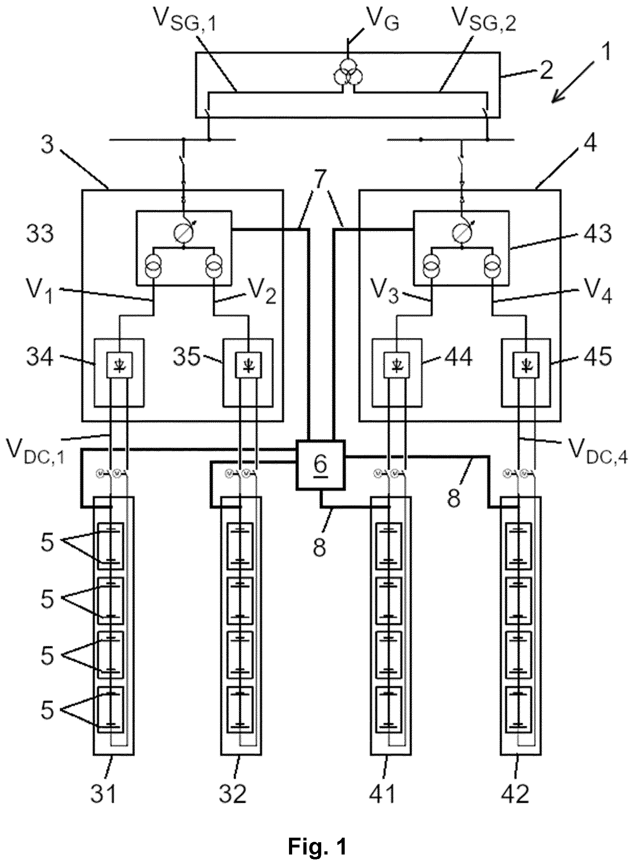

Fig. 1 shows an exemplary embodiment of an electrolysis plant 1 according to the invention. The electrolysis plant comprises, as an example, four electrolysis modules 31, 32, 41, 42. Each electrolysis module 31, 32, 41, 42 comprises a plurality of electrolysis cells 5 that are connected electrically in series. The cells 5 of each module 31, 32, 41, 42 form a so-called cell stack which is connected to appropriate piping (not shown) for feeding and discharging electrolysis educts and products to/from the stack.

The electrolysis plant 1 according to this example further comprises two transformer-rectifier units 3, 4 for providing the electrolysis modules 31, 32; 41, 42 respectively associated to each of the transformer-rectifier units 3, 4 with an individual DC module voltage V_{DC,i} chosen as to meet a module load set point Lᵢ of the respective module 31, 32; 41, 42. Generally, at least two electrolysis modules 31, 32; 41, 42 are associated to each transformer-rectifier unit 3; 4.

The index i stands here and in the following for the respective module number and thus runs from 1 to 4, in this example. The transformer-rectifier units 3, 4 each comprise a common transformer 33; 43 and one rectifier 34, 35; 44, 45 per associated electrolysis module 31, 32; 41, 42. The common transformer 33; 43 provides an individual AC intermediary voltage Vᵢ to the rectifiers 34, 35; 44, 45 of the transformer-rectifier unit 3, 4 and the rectifiers 34, 35; 44, 45 convert the AC intermediary voltage Vᵢ into the respective DC module voltage V_{DC,i}.

Further, the electrolysis plant comprises a control unit 6 that is connected, e.g. via control lines 7, to the transformer-rectifier units 3, 4 for setting the module load set points Lᵢ of the associated electrolysis modules 31, 32; 41, 42. The control unit 6 may also be connected to the electrolysis modules 31, 32; 41, 42 via measuring lines 8 to obtain actual values of the current and/or DC module voltage of each of the electrolysis modules 31, 32; 41, 42. Thereby a closed loop control for the module load set point Lᵢ can be obtained.

In the electrolysis plant 1 according to Fig. 1 the transformer-rectifier units 3, 4 are connected to a common power supply switchgear 2. The power supply switchgear 2 provides AC switchgear voltages V_{SG,1}, V_{SG,2} to the transformer-rectifier units 3, 4. The AC switchgear voltages V_{SG,1}, V_{SG,2} may be identical, or different from one another e.g. by a phase difference.

In the embodiment shown in Fig. 1 the transformer rectifier units 3, 4 each are configured such that the AC intermediary voltages Vᵢ supplied by the common transformer 33; 43 to the associated rectifiers 34, 35; 44, 45 differ by a preset first phase difference D1. The first phase difference D1 may preferably be established within the common transformer 33; 43 by having two different types of secondary windings (for example star, delta or zigzag windings).

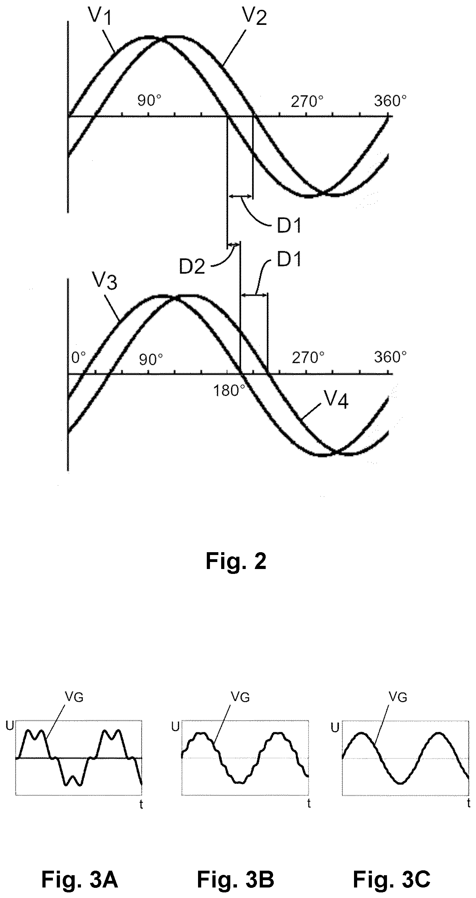

**Fig.** *2* shows in its upper part the AC intermediary voltages V₁, V₂ occurring within the transformer rectifier unit 3 and in its lower part the AC intermediary voltages V₃, V₄ occurring within the transformer rectifier unit 4. As can be seen from Fig. 2, the AC intermediary voltages V₁, V₂; V₃, V₄ differ by a first phase difference D1, respectively, which is exemplarily chosen at 30°. Thus, in this example the first phase difference D1 has the preferred value given by 60° divided by the number of electrolysis modules 31, 32; 41, 42 being supplied by the same transformer-rectifier unit 3; 4, which is two. This value of the phase difference D1 allows for an almost complete annihilation of the disturbing harmonics of 5^{th} and 7^{th} order, when the respective modules 31, 32; 41, 42 attached to each transformer-rectifier unit 3, 4 are operated at the same module load set point (L₁=L₂ and L₃=L₄).

In addition, the AC intermediary voltages V₁ and V₃ and the AC intermediary voltages V₂ and V₄ pairwise differ by a preset second phase difference D2 of 15°. Thus, in this embodiment the second phase difference D2 corresponds to the first phase difference D1 divided by the number of transformer-rectifier units 3, 4 attached to the common switchgear 2, which is equal to two. The second phase difference D2 allows for a further effective annihilation of the disturbing harmonics of 9^{th} and 11^{th} order, when all modules 31, 32, 41, 42 attached to the same switchgear 2 are operated at the same module load set point (L₁ = L₂ = L₃ = L₄).

The pairwise difference of the AC intermediary voltages V₁, V₃; V₂, V₄ by the preset second phase difference D2 can be obtained in several ways: Either the common switchgear 2 of the transformer-rectifier units 3, 4 already introduces the complete phase difference D2 between the switchgear voltages V_{SG,1} and V_{SG,2}, or the transformer-rectifier units 3, 4 are configured to generate the four different AC intermediary voltages V₁,, V₃; V₂, V₄ with the preset phase differences D1 and D2 from a single switchgear voltage V_{SG,1} (= V_{SG,2}), or the preset phase differences are obtained by a combination of both effects.

The effect of the harmonics reduction according to the invention is shown exemplarily in **Figs. 3A to 3C****.**

**Fig. 3A** shows schematically an AC grid voltage V_{G} which is heavily disturbed by disturbing harmonics of the 5^{th} and 7^{th} order as a back-reaction from rectifiers in a prior art electrolysis plant. **Fig. 3B** shows an AC grid voltage V_{G} with reduced disturbing harmonics due to negative interference on the level of the transformer-rectifier units 3, 4 by means of the first phase difference D1 and equal load distribution of the associated electrolysis modules 31, 32; 41, 42. **Fig. 3C** shows an AC grid voltage V_{G} with further reduced disturbing harmonics due to negative interference on the level of the common switchgear 2 by means of the second phase difference D2 and equal load distribution of the associated electrolysis modules 31, 32, 41, 42.

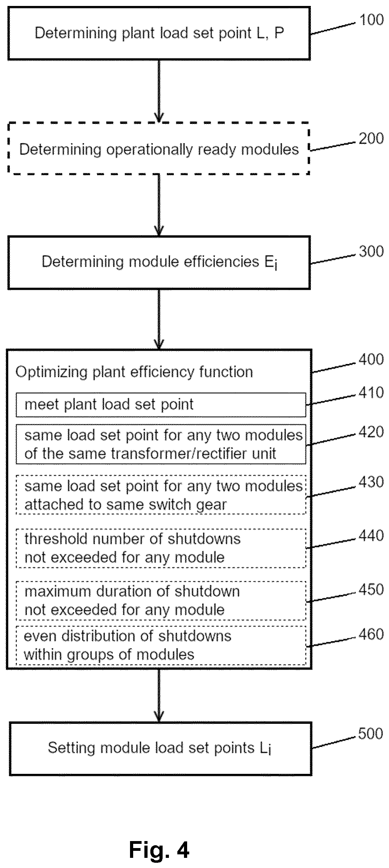

The control unit 6 of the electrolysis plant 1 according to Fig. 1 and 2 is preferably configured to perform the method according to the invention, which is explained in more detail with reference to **Figs. 4 to 6** in the following.

**Fig 4** shows a flow chart of the method according to the invention. The method starts by the step 100 of determining a plant load set point L, P of the electrolysis plant 1 corresponding to a target energy supply and/or target product output of the electrolysis plant 1. As a second, optional step 200 the subset of operationally ready modules may be determined, being the only modules to be considered during the further steps of the method. In step 300 the module efficiency Eᵢ of each of the considered electrolysis modules 31, 32; 41, 42 is determined. The optional step 200 may also be included into step 300 e.g. by assigning a specific efficiency value, for example a zero or negative efficiency to any electrolysis module that is currently not ready for operation. Thereby, the non-operational electrolysis modules can be marked and excluded from further consideration.

The method continues by the step 400 during which a plant efficiency function of the electrolysis plant 1 is optimized. The plant efficiency function has the module load set points Lᵢ of the electrolysis modules 31, 32; 41, 42 as variables and the module efficiencies Eᵢ as given parameters being held fixed during the optimization. The optimization step is carried out with the constraint 410 to meet the plant load set point L, P. The plant efficiency function thus relates module load set points Lᵢ and the module efficiencies Eᵢ with the plant load set point L, P. By the constraint 410 it is achieved that the plant globally is operated at the target load set point, i.e. that it consumes a target amount of electrical energy, or produces a target amount of electrolysis product(s).

The optimization step 400 is further carried out with the constraint 420 that any two electrolysis modules 31, 32; 41, 42 associated to the same transformer-rectifier unit 3; 4 are to be operated at the same module load set point Lᵢ, in order to achieve the reduction of disturbing harmonics according to the invention.

An additional, optional constraint 430 to be taken into account during optimization may be that any two electrolysis modules 31, 32, 41, 42 connected to the same switchgear 2 are to be operated at the same module load set point Lᵢ, if the electrolysis plant is configured such that the AC intermediary voltages Vᵢ of the transformer-rectifier units 3, 4 pairwise differ by a preset second phase difference D2 with the second phase difference D2 corresponding to the first phase difference D1 divided by the number of transformer-rectifier units 3, 4 attached to the common switchgear 2.

The optimization step 400 may be carried out with further optional constraints that are discussed in more detail below.

The method ends by the step 500 in which the module load set points Lᵢ of the modules 31, 32; 41, 42 are set according to the optimized plant efficiency function. The module load set points Lᵢ can be set by the control unit 6 sending corresponding commands to the transformer-rectifier units 3, 4 via control lines 7 (cf. Fig. 1).

After the method has ended, it may be started again from step 100. The start of the method may be triggered at certain time intervals, or event-based, e.g. always when updated data is received from which an updated plant load set point L, P can be determined.

The optimization step 400 can be subject to several additional, optional constraints:
For example, the optimization can be carried out with the constraint that the module load set points Lᵢ are to be chosen from a fixed set of permissible load set points. Often, electrolysis modules have a minimum permissible load set point below which the module cannot be operated, but has to be shut down, i.e. set to zero load. Thus, an exemplary set of permissible module load set point may be given by {0%, [10%-100%]}, i.e. the shutdown state 0% and the range of 10% to 100% of the nominal load. It may also be permissible to exceed the nominal 100% load state by 5% or even up to 10% for a limited amount of time. In certain embodiments, it may be advantageous to have a discrete set of permissible load set points, e.g. {0%, 10%, 25% 50%, 75%, 100%}. This may be helpful in order to simplify the design of a harmonic filter used to block remnant disturbing harmonics.

Other optional constraints 440, 450, 460 concern shutdown management of the modules 31, 32, 41, 42, and help to extend the service life of the modules.

For example, a threshold number of permissible shutdowns per module 31, 32, 41, 42 may be defined, wherein the control unit 6 counts the number of executed shutdowns for each electrolysis module 31, 32, 41, 42. The optimization step 400 is the carried out with the constraint 440 that the threshold number of permissible shutdowns must not be exceeded for any electrolysis module 31, 32, 41, 42.

As another example, a maximum permissible duration per shutdown may be defined, wherein the control unit 6 measures the duration of executed shutdowns for each electrolysis module 31, 32, 41, 42. The optimization step 400 is then carried out with the constraint 450 that the maximum permissible duration per shutdown must not be exceeded for any electrolysis module 31, 32, 41, 42.

As a final example, the electrolysis modules 31, 32, 41, 42 may be grouped into at least two groups, and the optimization step 400 is carried out with the constraint 460 that the number of executed shutdowns is evenly distributed among the electrolysis modules 31, 32, 41, 42 of each group.

Any or even all of the constraints 410, 420, 430, 440, 450, 460 can be implemented as soft constraints to the plant efficiency function. This can, for example, be done in such a way that the extent to which the soft constraint is violated is penalized in the plant efficiency function.

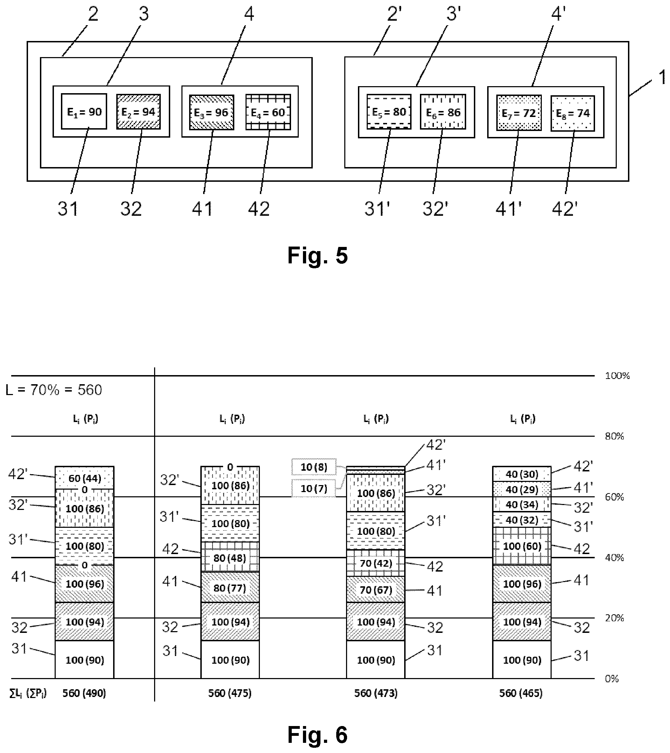

**Fig. 5** and **Fig. 6** contain an illustrative numerical example on how the different constraints during optimization step 400 influence the load set points Lᵢ of the electrolysis modules and the total efficiency of the electrolysis plant 1. It is to be noted that the module efficiencies Eᵢ assumed in this example are purely fictitious and are chosen to rather extreme values in order to highlight the effects of the invention.

**Fig. 5** shows very schematically another embodiment of an electrolysis plant 1 according to the invention. The only relevant difference compared to the embodiment shown in Fig. 1 is that the size of the electrolysis plant 1 has been doubled such that it contains eight modules 31, 32, 41, 42, 31', 32', 41', 42', four transformer-rectifier units, 3, 4, 3', 4' and two switchgears 2, 2'. Fig. 5 further shows the module efficiencies Eᵢ for each module. For example, module 31 has the module efficiency E₁ = 90 in arbitrary units, meaning that it is able to produce 90 units of electrolysis product out of 100 units of electrical energy. It is thus more efficient than module 31', which only produces 80 units of electrolysis product (E₄ = 80), and less efficient that module 32, which produces 94 units of electrolysis product (E₂ = 94) from the same 100 units of electrical energy. The boxes representing the electrolysis modules in Fig. 5 each have a differently shaded filling, which provides the key for reading the column diagrams of Fig. 6.

The diagram shown in **Fig. 6** contains four columns, each presenting a possible load distribution with different module load set points Lᵢ of the electrolysis cells 31, 32, 41, 42, 31', 32', 41', 42', but always for the same plant load set point L = 70 % based on target energy supply. In the example it is assumed that each electrolysis module has a nominal power consumption of 100 in arbitrary units of electrical energy, such that the eight modules at L=100% load consume 800 units of electrical energy. L=70% therefore corresponds to 560 units of electrical energy.

The first column of Fig. 6 represents a load distribution according to the prior art. The 560 units of electrical energy are distributed among the most efficient modules in descending order of efficiency. Thus, the five most efficient modules 31, 32, 41, 31' and 32' are attributed 100 units of electrical energy and 6^{th} efficient module 42' is attributed the remaining 60 units of electrical energy. The two least efficient modules 42 and 41' are attributed zero load and are switched off. This load distribution corresponds to the globally most efficient allocation of electrical energy, resulting in ΣPᵢ = 490 units of electrolysis product being produced from the L = ΣLᵢ = 560 units of electrical energy.

The second to fourth columns of Fig. 6 represent several load distributions according to the present invention.

The second column shows the effect of the constraint 420 being taken into account, namely that the electrolysis modules 31, 32; 41, 42; 31', 32'; 41', 42' supplied by the same transformer-rectifier unit 3; 4; 3'; 4' are to be operated at the same module load set point Lᵢ. This results in the totally least efficient module 42 not being switched off anymore, because it is paired with the very efficient module 41 sharing the same transformer-rectifier unit 4. In other words, the electrical energy is now allocated to the three pairs of electrolysis modules 31, 32; 41, 42; 31', 32' that have the best efficiency on average. Consequently the - on average - least efficient pair of electrolysis modules 41', 42' is attributed zero load, i.e. is shut down. By taking into account the constraint 420 the disturbing harmonics are reduced as described above. However, only a less than optimal overall efficiency of the plant is achieved, which in this example, produces only ΣPᵢ = 475 of electrolysis product from the same amount of energy L = ΣLᵢ = 560 (compared to ΣPᵢ = 490 of the first column).

The third column of Fig. 6 shows the effect of the constraint 440 being taken into account in addition to the constraints 410 and 420, i.e. that the total number of shutdowns for every module is limited. Typically, always the same least efficient pair of modules 41', 42' will be first subject to a shutdown in partial load operation of the electrolysis plant 1. Therefore, the threshold number of permissible shutdowns will be reached first for those modules 41', 42'. In the third column it is assumed that the threshold value of permissible shutdowns has already been reached for the modules 41', 42'. Otherwise, the situation corresponds to that of the second column. Now, the modules 41' and 42' cannot be shut down any more, and are therefore operated at the lowest permissible operating load, which is assumed to be 10%, in this example. The circumstance that all modules have to be kept in operation, in this example, leads to a further slight decrease in the overall efficiency of the plant (ΣPᵢ = 473 of electrolysis product from L = ΣLᵢ = 560 units of energy).

Finally, the fourth column of Fig. 6 shows the effect of the constraint 430 being taken into account in addition to the constraints 410 and 420. Thus, all modules 31, 32, 41, 42; 31', 32', 41', 42' supplied by the same switchgear 2, 2' are to be operated at the same module load set point Lᵢ. The modules 31, 32, 41, 42 connected to switchgear 2 have an on average higher efficiency and are thus each allocated 100 units of electrical energy. The remaining 160 units of electrical energy are evenly distributed among the modules 31', 32', 41', 42' supplied by switchgear 2' that have an on average lower efficiency. The even better reduction of harmonics of the constraint 430 comes at the price of a lowered overall efficiency of ΣPᵢ = 465 as compared to ΣPᵢ = 475 of the second column of Fig. 6.

In view of the reduced overall efficiency of the plant resulting from implementing the constraint 430, it may also be advantageous if the optimization step 400 comprises an optimization of the plant efficiency function both with and without constraint 430 and to decide based on the extent of the expected overall efficiency reduction of the plant, whether to set the modules at a load set point respecting constraint 430 in addition to the other constraints, or not.

### List of Reference Signs

- 1: electrolysis plant
- 2: switch gear
- 3, 4: transformer-rectifier unit
- 5: electrolysis cell
- 6: control unit
- 7: control line
- 8: measuring line
- 31, 32: electrolysis module
- 33: transformer
- 35, 35: rectifier
- 41, 42: electrolysis module
- 43: transformer
- 45, 45: rectifier

- 100: determining plant load set point
- 200: determining operationally ready modules
- 300: determining module efficiencies
- 400: optimizing plant efficiency function
- 410, 420, 430, 440, 450, 460: constraints
- 500: setting module load set points

- D1: first phase difference
- D2: second phase difference
- L: plant load set point based on target energy supply
- Lᵢ: module load set points
- P: plant load set point based on target product output
- V_{G}: AC grid voltage
- V_{SG,i}: AC switch gear voltages
- V_{AC,i}: AC intermediary voltages
- V_{OC,I}: DC module voltages

## Claims

1. Method for load control of an electrolysis plant, the electrolysis plant (1) comprising
- at least two electrolysis modules (31, 32; 41, 42) each comprising a plurality of electrolysis cells (5) that are connected electrically in series,
- at least one transformer-rectifier unit (3, 4) for providing the electrolysis modules (31, 32; 41, 42) associated to the transformer-rectifier unit (3, 4) with an individual DC module voltage (V_{DC,i}) to meet a module load set point (Lᵢ) of the respective module (31, 32; 41, 42), wherein the transformer-rectifier unit (3, 4) comprises a transformer (33; 43) for providing an AC intermediary voltage (Vᵢ) and a rectifier (34, 35; 44, 45) for converting the AC intermediary voltage (Vᵢ) into the respective DC module voltage (V_{DC,i}), and
- a control unit (6) connected to the transformer-rectifier unit (3, 4) for setting the module load set points (Lᵢ) of the associated electrolysis modules (31, 32; 41, 42),
wherein at least two of the electrolysis modules (31, 32; 41, 42) are associated to the transformer-rectifier unit (3, 4),
wherein the transformer-rectifier unit (3, 4) contains one common transformer (33; 43) and one rectifier (34, 35; 44, 45) per associated electrolysis module (31, 32; 41, 42),
wherein the AC intermediary voltages (Vᵢ) supplied by the common transformer (33; 43) to the associated rectifiers (34, 35; 44, 45) differ by a preset first phase difference (D1),
wherein the electrolysis plant (1) comprises at least one second transformer-rectifier unit (4; 3), wherein the transformer-rectifier units (3, 4) are connected to a common power supply switchgear (2), and
wherein the method comprises the following step that is carried out by the control unit (6):
- determining (100) a plant load set point (L, P) of the electrolysis plant (1) corresponding to a target energy supply and/or target product output of the electrolysis plant (1),
**characterized in that** the method further comprises the following steps that are carried out by the control unit (6):
- determining (300) a module efficiency (Eᵢ) of each of the electrolysis modules (31, 32; 41, 42),
- optimizing (400) a plant efficiency function of the electrolysis plant (1) having the module load set points (Lᵢ) of the electrolysis modules (31, 32; 41, 42) as variables and the module efficiencies (Eᵢ) as parameters with the constraint (410) to meet the plant load set point (L, P),
- setting (500) the module load set points (Lᵢ) of the modules (31, 32; 41, 42) according to the optimized plant efficiency function,
wherein the optimization step (400) is carried out with the constraint (420) that any two electrolysis modules (31, 32; 41, 42) associated to the same transformer-rectifier unit (3; 4) are to be operated at the same module load set point (Lᵢ), and
wherein the AC intermediary voltages (Vᵢ) of the transformer-rectifier units (3, 4) pairwise differ by a preset second phase difference (D2), wherein the second phase difference (D2) corresponds to the first phase difference (D1) divided by the number of transformer-rectifier units (3, 4) attached to the common switchgear (2), and wherein the optimization is carried out with the constraint (430) that any two electrolysis modules (31, 32, 41, 42) connected to the same switchgear (2) are to be operated at the same module load set point (Lᵢ).

2. Method according to claim 1, **characterized in that** the first phase difference (D1) corresponds to 60° divided by the number of electrolysis modules (31, 32; 41, 42) being supplied by the same transformer-rectifier unit (3; 4).

3. Method according to claim 1 or 2, **characterized in that** the optimization is carried out with the constraint that the module load set points (Lᵢ) are to be chosen from a fixed set of permissible load set points.

4. Method according to claim 3, **characterized in that** the set of permissible load set points is a discrete set.

5. Method according to claim 3 or 4, **characterized in that** the set of permissible load set points includes a shutdown of the respective module (31, 32, 41, 42) corresponding to zero load.

6. Method according to claim 5, **characterized in that** a threshold number of permissible shutdowns per module (31, 32, 41, 42) is defined, wherein the control unit (6) counts a number of executed shutdowns for each electrolysis module (31, 32, 41, 42) and wherein the optimization is carried out with the constraint (440) that the threshold number of permissible shutdowns must not be exceeded for any electrolysis module (31, 32, 41, 42).

7. Method according to claim 5 or 6, **characterized in that** a maximum permissible duration per shutdown is defined, wherein the control unit (6) measures the duration of executed shutdowns for each electrolysis module (31, 32, 41, 42) and wherein the optimization is carried out with the constraint (450) that the maximum permissible duration per shutdown must not be exceeded for any electrolysis module (31, 32, 41, 42).

8. Method according to any one of the claims 5 to 7, **characterized in that** the electrolysis modules (31, 32, 41, 42) are grouped into at least two groups, wherein the optimization is carried out with the constraint (460) that the number of executed shutdowns is evenly distributed among the electrolysis modules (31, 32, 41, 42) of each group.

9. Method according to any one of the claims 1 to 8, **characterized in that** at least part of the constraints (410, 420, 430, 440, 450, 460) are implemented as soft constraints to the plant efficiency function, in such a way that the extent to which the soft constraint is violated is penalized in plant efficiency function.

10. Electrolysis plant comprising
- at least two electrolysis modules (31, 32; 41, 42) each comprising a plurality of electrolysis cells (5) that are connected electrically in series,
- at least one transformer-rectifier unit (3, 4) for providing the electrolysis modules (31, 32; 41, 42) associated to the transformer-rectifier unit (3, 4) with an individual DC module voltage (V_{DC,i}) to meet a module load set point (Lᵢ) of the respective module (31, 32; 41, 42), wherein the transformer-rectifier unit (3, 4) comprises a transformer (33; 43) for providing an AC intermediary voltage (Vᵢ) and a rectifier (34, 35; 44, 45) for converting the AC intermediary voltage (Vᵢ) into the respective DC module voltage (V_{DC,i}), and
- a control unit (6) connected to the transformer-rectifier unit (3, 4) for setting the module load set points (Lᵢ) of the associated electrolysis modules (31, 32; 41, 42),
wherein at least two of the electrolysis modules (31, 32; 41, 42) are associated to the transformer-rectifier unit (3, 4),
wherein the transformer-rectifier unit (3, 4) contains one common transformer (33; 43) and one rectifier (34, 35; 44, 45) per associated electrolysis module (31, 32; 41, 42), and
wherein the transformer rectifier unit (3, 4) is configured such that the AC intermediary voltages (Vᵢ) supplied by the common transformer (33; 43) to the associated rectifiers (34, 35; 44, 45) differ by a preset first phase difference (D1),
wherein the electrolysis plant (1) comprises at least one second transformer-rectifier unit (4; 3), wherein the transformer-rectifier units (3, 4) are connected to a common power supply switchgear (2),
**characterized in that** transformer rectifier units (3, 4) are configured such that the AC intermediary voltages (Vᵢ) of the transformer-rectifier units (3, 4) pairwise differ by a preset second phase difference (D2), wherein the second phase difference (D2) corresponds to the first phase difference (D1) divided by the number of transformer-rectifier units (3, 4) attached to the common switchgear (2).

11. Electrolysis plant according to claim 10, **characterized in that** the control unit (6) is configured to perform the method according to any one of the claims 1 to 9.

12. Computer program comprising instructions which, when the program is executed by a control unit (6) in an electrolysis plant (1) according to claim 10 or 11, cause the control unit (6) to carry out the method according to any one of the claims 1 to 9.

13. A computer-readable storage medium comprising instructions which, when executed by a control unit (6) in an electrolysis plant (1) according to claim 10 or 11, cause the control unit (6) to carry out the method according to any one of the claims 1 to 9.

## Patentansprüche

1. Verfahren zur Laststeuerung einer Elektrolyseanlage, wobei die Elektrolyseanlage (1) umfasst
• mindestens zwei Elektrolysemodule (31, 32; 41, 42), die jeweils eine Vielzahl von Elektrolysezellen (5) umfassen, die elektrisch in Reihe geschaltet sind,
• mindestens eine Transformator-Gleichrichter-Einheit (3, 4) zur Versorgung der der Transformator-Gleichrichter-Einheit (3, 4) zugeordneten Elektrolysemodule (31, 32; 41, 42) mit einer individuellen Gleichstrom-Modulspannung (V_{DC,i}), um einen Modul-Lastsollwert (Lᵢ) des jeweiligen Moduls (31, 32; 41, 42) zu erfüllen, wobei die Transformator-Gleichrichter-Einheit (3, 4) einen Transformator (33; 43) zur Bereitstellung einer Wechselstrom-Zwischenspannung (Vᵢ) und einen Gleichrichter (34, 35; 44, 45) zur Umwandlung der Wechselstrom-Zwischenspannung (Vᵢ) in die jeweilige Gleichstrom-Modulspannung (V_{DC,i}) umfasst, und
• eine mit der Transformator-Gleichrichter-Einheit (3, 4) verbundene Steuereinheit (6) zum Einstellen der Modul-Lastsollwerte (Lᵢ) der zugeordneten Elektrolysemodule (31, 32; 41, 42),
wobei mindestens zwei der Elektrolysemodule (31, 32; 41, 42) der Transformator-Gleichrichter-Einheit (3, 4) zugeordnet sind,
wobei die Transformator-Gleichrichter-Einheit (3, 4) einen gemeinsamen Transformator (33; 43) und einen Gleichrichter (34, 35; 44, 45) pro zugeordnetem Elektrolysemodul (31, 32; 41, 42) enthält,
wobei sich die von dem gemeinsamen Transformator (33; 43) an die zugeordneten Gleichrichter (34, 35; 44, 45) gelieferten Wechselstrom-Zwischenspannungen (Vᵢ) um eine vorgegebene erste Phasendifferenz (D1) unterscheiden,
wobei die Elektrolyseanlage (1) mindestens eine zweite Transformator-Gleichrichter-Einheit (4; 3) umfasst, wobei die Transformator-Gleichrichter-Einheiten (3, 4) mit einer gemeinsamen Stromversorgungsschaltanlage (2) verbunden sind, und wobei das Verfahren den folgenden von der Steuereinheit (6) ausgeführten Schritt umfasst:
• Bestimmen (100) eines Anlagen-Lastsollwerts (L, P) der Elektrolyseanlage (1), der einer Zielenergiezufuhr und/oder einer Zielproduktionsmenge der Elektrolyseanlage (1) entspricht,
**dadurch gekennzeichnet, dass** das Verfahren ferner die folgenden von der Steuereinheit (6) ausgeführten Schritte umfasst:
• Bestimmen (300) eines Modulwirkungsgrads (Eᵢ) jedes der Elektrolysemodule (31, 32; 41, 42),
• Optimieren (400) einer Anlagenwirkungsgradfunktion der Elektrolyseanlage (1), welche die Modul-Lastsollwerte (Lᵢ) der Elektrolysemodule (31, 32; 41, 42) als Variablen und die Modulwirkungsgrade (Eᵢ) als Parameter aufweist, unter der Nebenbedingung (410), den Anlagen-Lastsollwert (L, P) zu erfüllen,
• Einstellen (500) der Modul-Lastsollwerte (Lᵢ) der Module (31, 32; 41, 42) entsprechend der optimierten Anlagenwirkungsgradfunktion,
wobei der Optimierungsschritt (400) unter der Nebenbedingung (420) durchgeführt wird, dass beliebige zwei derselben Transformator-Gleichrichter-Einheit (3; 4) zugeordnete Elektrolysemodule (31, 32; 41, 42) mit demselben Modul-Lastsollwert (Lᵢ) betrieben werden sollen, und
wobei sich die Wechselstrom-Zwischenspannungen (Vᵢ) der Transformator-Gleichrichter-Einheiten (3, 4) paarweise um eine vorgegebene zweite Phasendifferenz (D2) unterscheiden, wobei die zweite Phasendifferenz (D2) der ersten Phasendifferenz (D1) geteilt durch die Anzahl der an die gemeinsame Schaltanlage (2) angeschlossenen Transformator-Gleichrichter-Einheiten (3, 4) entspricht, und wobei die Optimierung unter der Nebenbedingung (430) durchgeführt wird, dass beliebige zwei an dieselbe Schaltanlage (2) angeschlossene Elektrolysemodule (31, 32, 41, 42) mit demselben Modul-Lastsollwert (Lᵢ) betrieben werden sollen.

2. Verfahren nach Anspruch 1, **dadurch gekennzeichnet, dass** die erste Phasendifferenz (D1) 60° geteilt durch die Anzahl der von derselben Transformator-Gleichrichter-Einheit (3; 4) versorgten Elektrolysemodule (31, 32; 41, 42) entspricht.

3. Verfahren nach Anspruch 1 oder 2, **dadurch gekennzeichnet, dass** die Optimierung unter der Nebenbedingung durchgeführt wird, dass die Modul-Lastsollwerte (Lᵢ) aus einer festen Menge zulässiger Lastsollwerte auszuwählen sind.

4. Verfahren nach Anspruch 3, **dadurch gekennzeichnet, dass** die Menge zulässiger Lastsollwerte eine diskrete Menge ist.

5. Verfahren nach Anspruch 3 oder 4, **dadurch gekennzeichnet, dass** die Menge zulässiger Lastsollwerte eine Abschaltung des jeweiligen Moduls (31, 32, 41, 42) entsprechend einer Last von Null umfasst.

6. Verfahren nach Anspruch 5, **dadurch gekennzeichnet, dass** eine Schwellenanzahl zulässiger Abschaltungen pro Modul (31, 32, 41, 42) definiert ist, wobei die Steuereinheit (6) eine Anzahl erfolgter Abschaltungen für jedes Elektrolysemodul (31, 32, 41, 42) zählt und wobei die Optimierung unter der Nebenbedingung (440) durchgeführt wird, dass die Schwellenanzahl zulässiger Abschaltungen für kein Elektrolysemodul (31, 32, 41, 42) überschritten werden darf.

7. Verfahren nach Anspruch 5 oder 6, **dadurch gekennzeichnet, dass** eine maximal zulässige Dauer pro Abschaltung definiert ist, wobei die Steuereinheit (6) die Dauer der erfolgten Abschaltungen für jedes Elektrolysemodul (31, 32, 41, 42) misst und wobei die Optimierung unter der Nebenbedingung (450) durchgeführt wird, dass die maximal zulässige Dauer pro Abschaltung für kein Elektrolysemodul (31, 32, 41, 42) überschritten werden darf.

8. Verfahren nach einem der Ansprüche 5 bis 7, **dadurch gekennzeichnet, dass** die Elektrolysemodule (31, 32, 41, 42) in mindestens zwei Gruppen gruppiert sind, wobei die Optimierung unter der Nebenbedingung (460) durchgeführt wird, dass die Anzahl der erfolgten Abschaltungen gleichmäßig auf die Elektrolysemodule (31, 32, 41, 42) jeder Gruppe verteilt wird.

9. Verfahren nach einem der Ansprüche 1 bis 8, **dadurch gekennzeichnet, dass** mindestens ein Teil der Nebenbedingungen (410, 420, 430, 440, 450, 460) als weiche Nebenbedingungen in der Anlagenwirkungsgradfunktion implementiert ist, derart, dass das Ausmaß, in dem die weiche Nebenbedingung verletzt wird, in der Anlagenwirkungsgradfunktion bestraft wird.

10. Elektrolyseanlage, umfassend
• mindestens zwei Elektrolysemodule (31, 32; 41, 42), die jeweils eine Vielzahl von Elektrolysezellen (5) umfassen, die elektrisch in Reihe geschaltet sind,
• mindestens eine Transformator-Gleichrichter-Einheit (3, 4) zur Versorgung der der Transformator-Gleichrichter-Einheit (3, 4) zugeordneten Elektrolysemodule (31, 32; 41, 42) mit einer individuellen Gleichstrom-Modulspannung (V_{DC,i}), um einen Modul-Lastsollwert (Lᵢ) des jeweiligen Moduls (31, 32; 41, 42) zu erfüllen, wobei die Transformator-Gleichrichter-Einheit (3, 4) einen Transformator (33; 43) zur Bereitstellung einer Wechselstrom-Zwischenspannung (Vᵢ) und einen Gleichrichter (34, 35; 44, 45) zur Umwandlung der Wechselstrom-Zwischenspannung (Vᵢ) in die jeweilige Gleichstrom-Modulspannung (V_{DC,i}) umfasst, und
• eine mit der Transformator-Gleichrichter-Einheit (3, 4) verbundene Steuereinheit (6) zum Einstellen der Modul-Lastsollwerte (Lᵢ) der zugeordneten Elektrolysemodule (31, 32; 41, 42),
wobei mindestens zwei der Elektrolysemodule (31, 32; 41, 42) der Transformator-Gleichrichter-Einheit (3, 4) zugeordnet sind,
wobei die Transformator-Gleichrichter-Einheit (3, 4) einen gemeinsamen Transformator (33; 43) und einen Gleichrichter (34, 35; 44, 45) pro zugeordnetem Elektrolysemodul (31, 32; 41, 42) enthält, und
wobei die Transformator-Gleichrichter-Einheit (3, 4) derart ausgestaltet ist, dass sich die von dem gemeinsamen Transformator (33; 43) an die zugeordneten Gleichrichter (34, 35; 44, 45) gelieferten Wechselstrom-Zwischenspannungen (Vᵢ) um eine vorgegebene erste Phasendifferenz (D1) unterscheiden,
wobei die Elektrolyseanlage (1) mindestens eine zweite Transformator-Gleichrichter-Einheit (4; 3) umfasst, wobei die Transformator-Gleichrichter-Einheiten (3, 4) mit einer gemeinsamen Stromversorgungsschaltanlage (2) verbunden sind, **dadurch gekennzeichnet, dass** die Transformator-Gleichrichter-Einheiten (3, 4) derart ausgestaltet sind, dass sich die Wechselstrom-Zwischenspannungen (Vᵢ) der Transformator-Gleichrichter-Einheiten (3, 4) paarweise um eine vorgegebene zweite Phasendifferenz (D2) unterscheiden, wobei die zweite Phasendifferenz (D2) der ersten Phasendifferenz (D1) geteilt durch die Anzahl der an die gemeinsame Schaltanlage (2) angeschlossenen Transformator-Gleichrichter-Einheiten (3, 4) entspricht.

11. Elektrolyseanlage nach Anspruch 10, **dadurch gekennzeichnet, dass** die Steuereinheit (6) dazu ausgestaltet ist, das Verfahren nach einem der Ansprüche 1 bis 9 auszuführen.

12. Computerprogramm, umfassend Anweisungen, die, wenn das Programm von einer Steuereinheit (6) in einer Elektrolyseanlage (1) nach Anspruch 10 oder 11 ausgeführt wird, die Steuereinheit (6) veranlassen, das Verfahren nach einem der Ansprüche 1 bis 9 auszuführen.

13. Computerlesbares Speichermedium, umfassend Anweisungen, die, wenn sie von einer Steuereinheit (6) in einer Elektrolyseanlage (1) nach Anspruch 10 oder 11 ausgeführt werden, die Steuereinheit (6) veranlassen, das Verfahren nach einem der Ansprüche 1 bis 9 auszuführen.

## Revendications

1. Procédé de commande de charge d'une installation d'électrolyse, l'installation d'électrolyse (1) comprenant
• au moins deux modules d'électrolyse (31, 32 ; 41, 42), comprenant chacun une pluralité de cellules d'électrolyse (5) qui sont connectées électriquement en série,
• au moins une unité transformateur-redresseur (3, 4) destinée à fournir aux modules d'électrolyse (31, 32 ; 41, 42) associés à l'unité transformateur-redresseur (3, 4) une tension de module en courant continu individuelle (V_{DC,i}) afin de satisfaire une consigne de charge de module (Li) du module respectif (31, 32 ; 41, 42), l'unité transformateur-redresseur (3, 4) comprenant un transformateur (33 ; 43) destiné à fournir une tension intermédiaire en courant alternatif (Vᵢ) et un redresseur (34, 35 ; 44, 45) destiné à convertir la tension intermédiaire en courant alternatif (Vᵢ) en la tension de module en courant continu respective (V_{DC,i}), et
• une unité de commande (6) connectée à l'unité transformateur-redresseur (3, 4) pour régler les consignes de charge de module (Lᵢ) des modules d'électrolyse associés (31, 32 ; 41, 42),
dans lequel au moins deux des modules d'électrolyse (31, 32 ; 41, 42) sont associés à l'unité transformateur-redresseur (3, 4),
dans lequel l'unité transformateur-redresseur (3, 4) contient un transformateur commun (33 ; 43) et un redresseur (34, 35 ; 44, 45) par module d'électrolyse associé (31, 32 ; 41, 42),
dans lequel les tensions intermédiaires en courant alternatif (Vᵢ) fournies par le transformateur commun (33 ; 43) aux redresseurs associés (34, 35 ; 44, 45) diffèrent d'un premier déphasage prédéfini (D1),
dans lequel l'installation d'électrolyse (1) comprend au moins une deuxième unité transformateur-redresseur (4 ; 3), les unités transformateur-redresseur (3, 4) étant connectées à un appareillage de commutation d'alimentation électrique commun (2), et
dans lequel le procédé comprend l'étape suivante exécutée par l'unité de commande (6) :
• détermination (100) d'une consigne de charge de l'installation (L, P) de l'installation d'électrolyse (1) correspondant à une alimentation énergétique cible et/ou à une production cible de produit de l'installation d'électrolyse (1),
**caractérisé en ce que** le procédé comprend en outre les étapes suivantes exécutées par l'unité de commande (6) :
• détermination (300) d'un rendement de module (Eᵢ) de chacun des modules d'électrolyse (31, 32 ; 41, 42),
• optimisation (400) d'une fonction de rendement de l'installation de l'installation d'électrolyse (1), ayant les consignes de charge de module (Lᵢ) des modules d'électrolyse (31, 32 ; 41, 42) comme variables et les rendements de module (Eᵢ) comme paramètres, sous la contrainte (410) de satisfaire la consigne de charge de l'installation (L, P),
• réglage (500) des consignes de charge de module (Lᵢ) des modules (31, 32 ; 41, 42) conformément à la fonction de rendement de l'installation optimisée,
dans lequel l'étape d'optimisation (400) est effectuée sous la contrainte (420) que deux modules d'électrolyse quelconques (31, 32 ; 41, 42) associés à la même unité transformateur-redresseur (3 ; 4) doivent être exploités avec la même consigne de charge de module (Lᵢ), et
dans lequel les tensions intermédiaires en courant alternatif (Vᵢ) des unités transformateur-redresseur (3, 4) diffèrent deux à deux d'un deuxième déphasage prédéfini (D2), le deuxième déphasage (D2) correspondant au premier déphasage (D1) divisé par le nombre d'unités transformateur-redresseur (3, 4) raccordées au même appareillage de commutation (2), et dans lequel l'optimisation est effectuée sous la contrainte (430) que deux modules d'électrolyse quelconques (31, 32, 41, 42) connectés au même appareillage de commutation (2) doivent être exploités avec la même consigne de charge de module (Lᵢ).

2. Procédé selon la revendication 1, **caractérisé en ce que** le premier déphasage (D1) correspond à 60° divisé par le nombre de modules d'électrolyse (31, 32 ; 41, 42) alimentés par la même unité transformateur-redresseur (3 ; 4).

3. Procédé selon la revendication 1 ou 2, **caractérisé en ce que** l'optimisation est effectuée sous la contrainte que les consignes de charge de module (Lᵢ) soient choisies parmi un ensemble fixe de consignes de charge admissibles.

4. Procédé selon la revendication 3, **caractérisé en ce que** l'ensemble des consignes de charge admissibles est un ensemble discret.

5. Procédé selon la revendication 3 ou 4, **caractérisé en ce que** l'ensemble des consignes de charge admissibles comprend un arrêt du module respectif (31, 32, 41, 42) correspondant à une charge nulle.

6. Procédé selon la revendication 5, **caractérisé en ce qu'**un nombre seuil d'arrêts admissibles par module (31, 32, 41, 42) est défini, l'unité de commande (6) comptant un nombre d'arrêts exécutés pour chaque module d'électrolyse (31, 32, 41, 42) et l'optimisation étant effectuée sous la contrainte (440) que le nombre seuil d'arrêts admissibles ne soit dépassé pour aucun module d'électrolyse (31, 32, 41, 42).

7. Procédé selon la revendication 5 ou 6, **caractérisé en ce qu'**une durée maximale admissible par arrêt est définie, l'unité de commande (6) mesurant la durée des arrêts exécutés pour chaque module d'électrolyse (31, 32, 41, 42) et l'optimisation étant effectuée sous la contrainte (450) que la durée maximale admissible par arrêt ne soit dépassée pour aucun module d'électrolyse (31, 32, 41, 42).

8. Procédé selon l'une quelconque des revendications 5 à 7, **caractérisé en ce que** les modules d'électrolyse (31, 32, 41, 42) sont regroupés en au moins deux groupes, l'optimisation étant effectuée sous la contrainte (460) que le nombre d'arrêts exécutés soit réparti uniformément entre les modules d'électrolyse (31, 32, 41, 42) de chaque groupe.

9. Procédé selon l'une quelconque des revendications 1 à 8, **caractérisé en ce qu'**au moins une partie des contraintes (410, 420, 430, 440, 450, 460) est mise en œuvre sous forme de contraintes souples dans la fonction de rendement de l'installation, de telle sorte que le degré de violation de la contrainte souple est pénalisé dans la fonction de rendement de l'installation.

10. Installation d'électrolyse comprenant
• au moins deux modules d'électrolyse (31, 32 ; 41, 42), comprenant chacun une pluralité de cellules d'électrolyse (5) qui sont connectées électriquement en série,
• au moins une unité transformateur-redresseur (3, 4) destinée à fournir aux modules d'électrolyse (31, 32 ; 41, 42) associés à l'unité transformateur-redresseur (3, 4) une tension de module en courant continu individuelle (V_{DC,i}) afin de satisfaire une consigne de charge de module (Lᵢ) du module respectif (31, 32 ; 41, 42), l'unité transformateur-redresseur (3, 4) comprenant un transformateur (33 ; 43) destiné à fournir une tension intermédiaire en courant alternatif (Vᵢ) et un redresseur (34, 35 ; 44, 45) destiné à convertir la tension intermédiaire en courant alternatif (Vᵢ) en la tension de module en courant continu respective (V_{DC,i}), et
• une unité de commande (6) connectée à l'unité transformateur-redresseur (3, 4) pour régler les consignes de charge de module (Lᵢ) des modules d'électrolyse associés (31, 32 ; 41, 42),
dans lequel au moins deux des modules d'électrolyse (31, 32 ; 41, 42) sont associés à l'unité transformateur-redresseur (3, 4),
dans lequel l'unité transformateur-redresseur (3, 4) contient un transformateur commun (33 ; 43) et un redresseur (34, 35 ; 44, 45) par module d'électrolyse associé (31, 32 ; 41, 42), et
dans lequel l'unité transformateur-redresseur (3, 4) est configurée de telle sorte que les tensions intermédiaires en courant alternatif (Vᵢ) fournies par le transformateur commun (33 ; 43) aux redresseurs associés (34, 35 ; 44, 45) diffèrent d'un premier déphasage prédéfini (D1),
dans lequel l'installation d'électrolyse (1) comprend au moins une deuxième unité transformateur-redresseur (4 ; 3), les unités transformateur-redresseur (3, 4) étant connectées à un appareillage de commutation d'alimentation électrique commun (2),
**caractérisée en ce que** les unités transformateur-redresseur (3, 4) sont configurées de telle sorte que les tensions intermédiaires en courant alternatif (Vi) des unités transformateur-redresseur (3, 4) diffèrent deux à deux d'un deuxième déphasage prédéfini (D2), le deuxième déphasage (D2) correspondant au premier déphasage (D1) divisé par le nombre d'unités transformateur-redresseur (3, 4) raccordées au même appareillage de commutation (2).

11. Installation d'électrolyse selon la revendication 10, **caractérisée en ce que** l'unité de commande (6) est configurée pour exécuter le procédé selon l'une quelconque des revendications 1 à 9.

12. Programme d'ordinateur comprenant des instructions qui, lorsque le programme est exécuté par une unité de commande (6) dans une installation d'électrolyse (1) selon la revendication 10 ou 11, amènent l'unité de commande (6) à exécuter le procédé selon l'une quelconque des revendications 1 à 9.

13. Support de stockage lisible par ordinateur comprenant des instructions qui, lorsqu'elles sont exécutées par une unité de commande (6) dans une installation d'électrolyse (1) selon la revendication 10 ou 11, amènent l'unité de commande (6) à exécuter le procédé selon l'une quelconque des revendications 1 à 9.
